# EUROPÄISCHE PATENTSCHRIFT

(11) **EP 3 884 744 B1**
(45) Veröffentlichungstag und Bekanntmachung des Hinweises auf die Patenterteilung: **20.09.2023**
(21) Anmeldenummer: 21164140.2
(22) Anmeldetag: 23.03.2021
(51) Int. Cl.: A01B 45/02

(54) **WALZENSPITZE**
ROLLER TIP
POINTE DE ROULEAU

(30) Priorität: 23.03.2020 DE 102020107870
(43) Veröffentlichungstag der Anmeldung: 29.09.2021
(73) Patentinhaber: Brielmaier Immobilien UG & Co. KG, 88048 Friedrichshafen (DE)
(72) Erfinder: BRIELMAIER, Martin, 88048 Friedrichshafen (DE)
(74) Vertreter: Patentanwälte und Rechtsanwalt Weiß, Arat & Partner mbB

(56) Entgegenhaltungen:
- EP-A1- 1 731 010
- AT-B- 42 352
- Labek Michael: "TerraTec präsentiert Weltneuheit | top agrar Österreich", , 13. September 2019 (2019-09-13), Seiten 1-3, XP055825806, Gefunden im Internet: URL:https://www.topagrar.at/technik/news/t erratec-praesentiert-weltneuheit-11814520. html [gefunden am 2021-07-20]

## Beschreibung

### Technisches Gebiet

Die Erfindung betrifft eine Walzenspitze nach dem Oberbegriff des Anspruchs 1.

### Stand der Technik

Derartige Walzenspitzen sind bereits in vielfältiger Form und Ausgestaltung bekannt und gebräuchlich. So wird beispielsweise in der EP 1 731 010 A1 eine Stachelwalze mit ausgehalsten Öffnungen offenbart, auf welche Walzenspitzen auf- oder eingesetzt werden können. Dabei werden Walzenspitzen aus Hartkunststoff bevorzugt.

In dem Artikel TerraTec präsentiert Weltneuheit vom 13.09.2019 von Michael Labek, https://www.topagrar.at/technik/news/terratec-praesentiert-weltneuheit-11814520.html, wird eine Gummi-Stachelwalze für Einachser offenbart, wobei eine Variante mit Stahlspitzenverstärkung vorgestellt wird.

In der DE 10 2019 106 793 A1 wird ein Einachsfahrzeug mit einem Antrieb, einem Kühler und einer ersten Stachelwalze und eines zweiten Stachelwalze offenbart.

In der AT 42 352 B wird schließlich noch eine Stachelwalze für landwirtschaftliche Zwecke offenbart, wobei eine Auswechslbarkeit der Stacheln vorgesehen ist, so dass eine Stachelwalze in eine geöhnliche Walze umgewandelt werden kann.

Ferner ist noch die EP 1 731 010 A1 anzuführen, hier wird eine Fahrwalze mit einem Walzenmantel, auf dessen Oberfläche sich Vorsprünge mit einer Spitze befinden sowie ein Verfahren zum Herstellen einer Fahrwalze für ein Fahrzeug offenabrt.

### Aufgabe der Erfindung

Die Aufgabe der vorliegenden Erfindung ist es, die Nachteile aus dem Stand der Technik zu überwinden. Insbesondere soll eine Walzenspitze bereitgestellt werden, die möglichst flexibel einsetzbar sein soll und eine höhere Lebenserwartung aufweist.

### Lösung der Aufgabe

Zur Lösung der Aufgabe führen die Merkmale nach dem Anspruch 1.

Vorteilhafte Ausgestaltungen sind in den Unteransprüchen beschrieben.

Die erfindungsgemässe Walzenspitze kommt für eine Landwirtschaftsmaschinen-Stachelwalze zum Einsatz. Eine solche Landwirtschaftsmaschinen-Stachelwalze kommt beispielsweise bei Einachs-oder Mehrachs-Maschinen zum Einsatz, wenn der Untergrund den Einsatz normaler Gummireifen nicht mehr zulässt. Dies ist gerade bei Steilhängen oft der Fall. Ebenso kommen solche Stachelwalzen bei morastigen oder weichen Untergründen besser voran, als die üblichen Gummireifen. Die Walzenspitze besteht in der Regel aus einer Kunststoffbasis und einer auf der Kunststoffbasis aufsitzenden Metallspitze.

In diesem Zusammenhang wird auch darauf hingewiesen, dass es sich bei der Landwirtschaftsmaschinen-Stachelwalze um eine Stachelwalze aus einem metallenen Werkstoff handelt. Die Landwirtschaftsmaschinen-Stachelwalze ist vorzugsweise aus Aluminium hergestellt und weist Aushalsungen auf, auf welche die erfindungsgemäßen Walzenspitzen aufsetzbar sind. Dabei führt die Kunststoff-Basis dazu, dass ein flexibles federndes Element vorhanden ist. Im Stand der Technik sind Walzenspitzen bekannt, bei der die Kunststoff-Basis eine Kunststoff-Spitze aufweist.

Erfindungsgemäß handelt es sich bei der Spitze aber um eine eine Metallspitze. Die Metallspitze führt vorteilhaft dazu, dass das Eindringen in unterschiedliche Untergründe während der Nutzung besseren Halt garantieren. Auch ist vorteilhaft, dass die Metallspitze länger nutzbar ist. Die aus dem Stand der Technik bekannten Kunststoff-Spitzen werden gerade dann besonders abgenutzt, wenn die Stachelwalze über Asphalt oder Schotterwege beispielsweise zum Einsatzort gefahren wird.

Dabei ist erfindungsgemäß die Metallspitze mit der Kunststoffbasis verbunden. Außerdem wird die Kunststoffbasis auf die Aushalsung der Stachelwalze aufgesetzt und anschließend mittels einer Passscheibe oder einer Befestigungsplatte aus dem Inneren der Stachelwalze an die Aushalsung angezogen und befestigt wird.

Dabei kann ein Basis-Boden der Kunststoffbasis und die Passscheibe komplementär zueinander ausgebildet, wobei in Gebrauchslage die Aushalsung in einen Aushalsungsspalt bildet, der die Aushalsung zwischen der Kunststoffbasis und der Passscheibe festlegt.

Aus dem Stand der Technik sind bereits Walzenspitzen bekannt, welche vollständig aus Metall bestehen. Es sind auch Walzenspitzen bekannt, die vollständig aus Hartkunststoff bestehen. Im Rahmen der Erfindung ist es aber vorgesehen, dass die Walzenspitze zweiteilig aufgebaut ist und dabei die Basis eine Kunststoff-Basis ist und die Spitze eine Metallspitze ist. Dabei wird die Metallspitze mit der Kunststoff-Basis verbunden. Diese Verbindung kann mit Werkzeugen lösbar ausgeführt sein. Sie kann aber auch nur zerstörerisch lösbar ausgeführt sein. Beispielsweise kann bei der Herstellung der Kunststoff-Basis die Metallspitze mit einem Anker in die Kunststoffbasis eingegossen werden. Vorteilhaft an diesem Aufbau ist insgesamt, dass die Kunststoff-Basis eine Flexibilität einräumt und die Metallspitze den notwendigen Halt in den unzugänglichen Regionen gewährleistet. Es ist insofern eine vorteilhafte Kombination zweier Materialeigenschaften, welche die Handhabung erleichtern und die Lebensdauer der Walzenspitzen verlängert.

Für die Kunststoff-Basis wird in der Regel eine shore-Härte D von 55 bis 85, bevorzugter von 65 bis 75 eingesetzt. In diesem shore-Härte-Bereich besitzt die Kunststoff-Basis die notwendige Steifigkeit, um die auftretenden Kräfte aufzunehmen und ist trotzdem flexibel genug, um beispielsweise auf einem harten Untergrund, wie Stein oder Asphalt besser eingesetzt zu werden. Insbesondere bei einer shore-Härte D von 65 bis 75 ist eine gute Funktion auf hartem, wie auf weichem Untergrund gegeben. Auch können Kunststoff-Basen mit unterschiedlichen shore-Härten D zwischen 55 bis 85, bevorzugter von 65 bis 75 ausgestattet werden, um an unterschiedliche Landschaften anpassbar zu sein. Auf diese Weise kann der Nutzer je nach Region und landwirtschaftlichen Gegebenheiten eine shore-Härte D auswählen, die seinen Belangen am stärksten entgegenkommt.

In einem Ausführungsbeispiel ist die Kunststoff-Basis ein ausgehöhlter Kegelstumpf. Dabei weist eine Deckfläche des Kegelstumpfs eine erste Öffnung auf. Vorteilhaft ist hierbei, dass der ausgehöhlte Kegelstumpf die beabsichtigte Flexibilität weiter erleichtert, Material eingespart werden kann und die Metallspitze auf die Kunststoff-Basis besser aufgeschraubt werden kann, da in den ausgehöhlten Kegelstumpf hinein Werkzeuge gebracht werden können. Weiter ist die Metallspitze als Kegel ausgeführt, wobei eine Grundfläche des Kegels eine zweite Öffnung aufweist. Die Deckfläche des Kegelstumpfs und die Grundfläche des Kegels weisen in der Regel den gleichen Umfang auf. Gleiches gilt für die beiden Öffnungen. Es ist aber auch denkbar, dass die Grundfläche des Kegels einen grösseren Umfang oder einen kleineren Umfang als die Deckfläche des Kegelstumpfs bzw. der Kunststoffbasis aufweisen kann. Dies liegt im Ermessen des Nutzers bzw. des Herstellers. Sollte der Umfang der Grundfläche des Kegels kleiner sein als der Umfang der Deckfläche des Kegelstumpfs könnte die Metallspitze entsprechend von der Kunststoff-Basis zumindest teilweise umfangen werden, wenn die Kunststoff-Basis einen entsprechenden Ring auf der Deckfläche des Kegelstumpfs bzw. der Kunststoffbasis ausbildet.

Die beiden Öffnungen bilden in Gebrauchslage einen Durchgriff. In diesem Ausführungsbeispiel ist vorgesehen, dass die Metallspitze und die Kunststoff-Basis beispielsweise mittels einer Schraube verbunden werden können. Dazu muss die Schraube entweder von der Metallspitze zu der Kunststoff-Basis hin oder umgekehrt durch die beiden Öffnungen hindurchgreifen und auf der anderen Seite durch ein Gewinde bzw. eine Mutter festlegbar sein. Bei dem oben beschriebenen Beispiel ist ein solcher Durchgriff nicht notwendig, da die Metallspitze teilweise von Kunststoff umgossen bzw. umspritzt werden kann.

Wichtig ist in diesem Zusammenhang, dass die Metallspitze mit der Kunststoff-Basis durch ein erstes Verbindungselement und ein zweites Verbindungselement verbunden werden kann. Dabei soll eines der beiden Verbindungselemente eine Schraube und das jeweils andere Verbindungselemente eine Schraube und das jeweils andere Verbindungselement eine Mutter sein. Die Verbindungselemente können auch als jeweiliges Teil der Metallspitze bzw. der Kunststoff-Basis hergestellt werden. Dies kann einstückig oder mehrstückig oder durch Schweissen bzw. Fügen erreicht werden. Vorteilhaft ist hierbei insbesondere, dass die Deckfläche des Kegelstumpfs und die Grundfläche der Metallspitze direkt miteinander verbunden werden. Ansonsten müsste die Metallspitze direkt mit der Landwirtschaftsmaschinen-Stachelwalze verbunden werden, was aufgrund des langen Verbindungselementes und der dabei auftretenden Hebelkräfte nachteilig wäre. Im Stand der Technik kommt es hier immer wieder zum Abbrechen der Walzenspitze.

In einem anderen Ausführungsbeispiel weist die Walzenspitze ausserdem eine Befestigungsplatte auf. Die Befestigungsplatte ist derart ausgeführt, dass die Kunststoff-Basis mit der Befestigungsplatte verbunden ist und die Befestigungsplatte selbst wieder mit einer Stachelwalze verbunden werden kann. In einem weiteren Ausführungsbeispiel ist auch vorgesehen, dass die Kunststoff-Basis direkt mit einer Oberfläche der Landwirtschaftsmaschinen-Stachelwalze verbindbar ist. Auf diese Weise soll schnell und einfach die Walzenspitze ausgetauscht werden können. Dies kann beispielsweise dann notwendig sein, wenn auf unterschiedliche Untergründe mit einem unterschiedlichen shore-Härte-D-Bereich reagiert werden soll. Es ist auch denkbar, dass Walzenspitzen mit verschiedenen shore-Härte-D-Einheiten unterschiedlich farblich ausgeführt werden können, um hier dem Nutzer eine einfachere Handhabung zu geben. Dabei wird jeder shore-Härte-D-Einheit eine eigene Farbe zugeteilt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine Seitenansicht einer erfindungsgemäßen Walzenspitze;
- Figur 2: eine geschnittene Seitenansicht der Figur 1;
- Figur 3: eine geschnittene Seitenansicht eines weiteren Ausführungsbeispiels.

### Ausführungsbeispiel

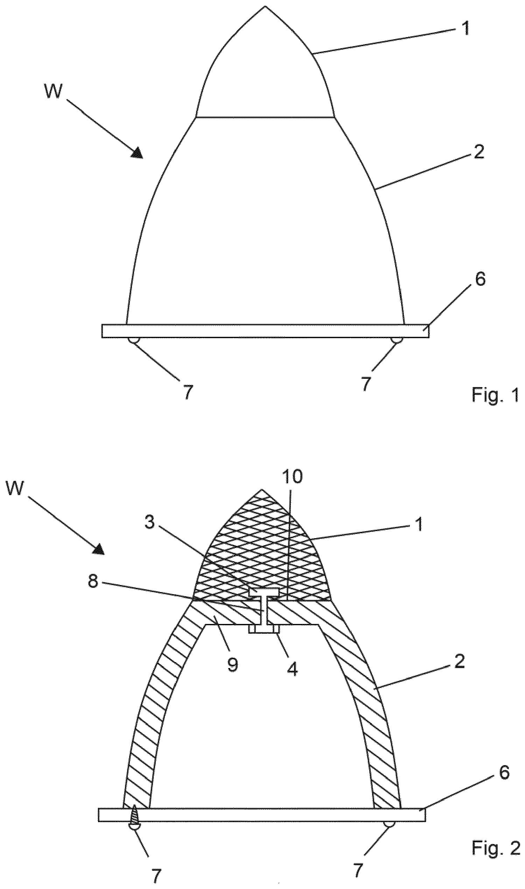

In Figur 1 ist eine Walzenspitze W dargestellt. Die Walzenspitze W ist dafür vorgesehen, dass sie auf eine Landwirtschaftsmaschinen-Stachelwalze aufsetzbar ist. Die Walzenspitze besteht in erster Linie aus einer Metallspitze 1 und einer Kunststoff-Basis 2. In dem hier gezeigten Ausführungsbeispiel ist die Kunststoff-Basis 2 einerseits mit der Metallspitze 1 und andererseits mit einer Befestigungsplatte 6 verbunden. Die Verbindung der Befestigungsplatte 6 erfolgt mittels der gezeigten Schrauben 7, die durch die Befestigungsplatte 6 hindurchgreifen und in die Kunststoff-Basis hineingreifen.

Die hier gezeigte Form der Kunststoff-Basis ist ein Kegelstumpf, wobei die Metallspitze 1 einen Kegel darstellt. Es ist aber auch denkbar, dass anstatt der kegelförmigen Ausführung beispielweise eine pyramidenförmige Ausbildung oder eine weitestgehend zylindrische Ausbildung möglich sein sollen.

In Figur 2 ist eine geschnittene Seitenansicht der Figur 1 gezeigt. Dort ist zu erkennen, dass die Kunststoff-Basis 2 ein ausgehöhlter Kegelstumpf ist. Die Kunststoff-Basis weist ausserdem eine Deckfläche 9 auf. In der Deckfläche 9 ist eine erste nicht näher beschriebene Öffnung gezeigt. Weiter ist gut zu erkennen, dass die Metallspitze 1 ein Kegel ist. Eine Grundfläche 10 des Kegels weist eine ebenfalls nicht näher bezeichnete zweite Öffnung auf, wobei in der hier gezeigten Gebrauchslage die erste Öffnung des Kegelstumpfs bzw. der Kunststoff-Basis 2 und die zweite Öffnung des Kegels bzw. der Metallspitze 1 in Gebrauchslage einen Durchgriff 8 bilden. Durch diesen Durchgriff 8 ragt ein erstes Verbindungselement 3 in Form einer Schraube oder zumindest einem Gewindestab durch den Durchgriff 8 hindurch und wird durch das zweite Verbindungselement 4 in Form einer Mutter angeschraubt, so dass die Kunststoffbasis 2 an die Metallspitze 1 herangezogen wird.

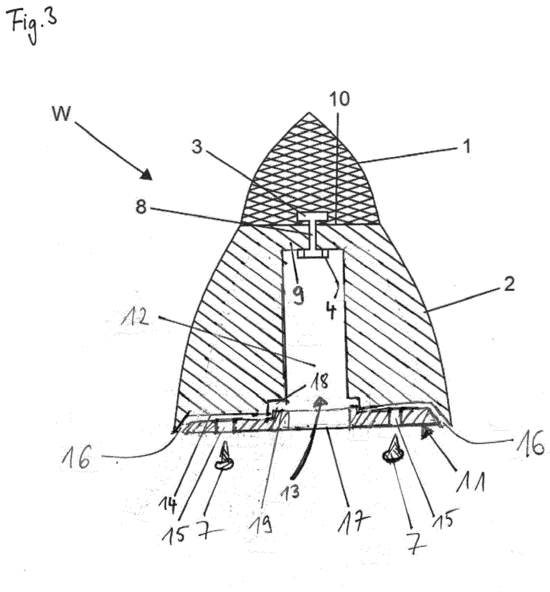

In Figur 3 ist ein weiteres erfindungsgemäßes Ausführungsbeispiel gezeigt. Dort ist zu erkennen, dass die Kunststoff-Basis 2 ein fast vollständiger Vollmaterial - Kegelstumpf ist. Weiter ist gut zu erkennen, dass die Metallspitze 1 ein Kegel ist. In der Deckfläche 9 ist eine erste nicht näher beschriebene Öffnung gezeigt. Eine Grundfläche 10 der Metallspitze 1 weist eine ebenfalls nicht näher bezeichnete zweite Öffnung auf, wobei in der hier gezeigten Einbaulage die erste Öffnung des Kegelstumpfs bzw. der Kunststoff-Basis 2 und die zweite Öffnung des Kegels bzw. der Metallspitze 1 in Gebrauchslage einen Durchgriff 8 bilden. Durch diesen Durchgriff 8 ragt ein erstes Verbindungselement 3 in Form einer Schraube oder zumindest einem Gewindestab durch den Durchgriff 8 hindurch und wird durch das zweite Verbindungselement 4 in Form einer Mutter angeschraubt, so dass die Kunststoffbasis 2 an die Metallspitze 1 herangezogen wird.

In der gezeigten Gebrauchslage wird an einen Basis-Boden 14 der Kunststoffbasis 2 eine Passscheibe 11 angeschraubt, wobei der Basis-Boden 14 und die Passscheibe 11 komplementär zueinander ausgebildet. Im gezeigten Ausführungsbeispiel weist der Basis-Boden 14 einen Passspalt 18 ausbildet, in welchen ein Passring 19 der Passscheibe 11 in Gebrauchslage einfährt.

Die Passscheibe 11 weist außerdem einen Scheibendurchlass 17 auf, die mit einem Schraubkanal 12 der Kunststoffbasis 2 in Gebrauchslage einen gemeinsamen Einlass 13 ausbilden. Durch den Einlass 13 kann der Nutzer beispielsweise die Metallspitze 1 gelöst, angezogen oder ausgetauscht werden kann. Insbesondere der Schraubkanal 12, welcher sich von dem Basis-Boden 14 bis zur Deckfläche 9 erstreckt ist notwendig, da eine Schraubverbindung der Metallspitze 1 am Basis-Boden 14 oder von dem Basis-Boden 14 bis zur Metallspitze 1 problematisch ist, da aufgrund der auftretenden Hebelkräfte zum Abbruch der Schraubverbindung führen kann.

Weiter sind Schrauböffnungen 15 in der Passscheibe 11 vorgesehen, durch welche die Schrauben 17 zur Befestigung der Passscheibe 11 an dem Basis-Boden 14 hindurchgleiten können. Die Passscheibe 11 wiederum ist bevorzugt aus Alu oder einem anderen metallenen Werkstoff.

**Bezugszeichenliste**

| | |
|---|---|
| 1 | Kunststoff-Basis |
| 2 | Metallspitze |
| 3 | Erstes Verbindungselement |
| 4 | Zweites Verbindungselement |
| 5 | Spitzenausnehmung |
| 6 | Befestigungsplatte |
| 7 | Schraube |
| 8 | Durchgriff |
| 9 | Deckfläche |
| 10 | Grundfläche |
| 11 | Passscheibe |
| 12 | Schraubkanal |
| 13 | Einlass |
| 14 | Basis-Boden |
| 15 | Schrauböffnung |
| 16 | Aushalsungsspalt |
| 17 | Scheibendurchlass |
| 18 | Passspalt |
| 19 | Passring |
| | |
| W | Walzenspitze |
| | |
| | |

## Patentansprüche

1. Walzenspitze (W) eingerichtet zum Aufsetzen auf eine Stachelwalze aus einem metallenen Werkstoff, die Walzenspitze (W) bestehend aus einer Basis und einer auf der Basis aufsitzenden Spitze,
**dadurch gekennzeichnet, dass**
die Basis eine Kunststoff-Basis (2) ist und die Spitze eine Metallspitze (1) ist, wobei die Metallspitze (1) mit der Kunststoff-Basis (2) verbunden ist.

2. Walzenspitze (W) nach Anspruch 1, **dadurch gekennzeichnet, dass** die Kunststoff-Basis (2) eine Shore-Härte D von 55 bis 85, bevorzugter von 65 bis 75 aufweist.

3. Walzenspitze (W) nach Anspruch 1 oder 2, **dadurch gekennzeichnet, dass** die Kunststoff-Basis (2) ein ausgehöhlter Kegelstumpf ist, wobei eine Deckfläche (9) des Kegelstumpfs eine erste Öffnung aufweist.

4. Walzenspitze (W) nach einem der vorigen Ansprüche, **dadurch gekennzeichnet, dass** die Metallspitze (1) ein Kegel ist, wobei eine Grundfläche (10) des Kegels eine zweite Öffnung aufweist.

5. Walzenspitze (W) nach Anspruch 4, **dadurch gekennzeichnet, dass** die erste Öffnung des Kegelstumpfs und die zweite Öffnung des Kegels in Gebrauchslage einen Durchgriff (8) bilden.

6. Walzenspitze (W) nach einem der vorigen Ansprüche, **dadurch gekennzeichnet, dass** die Metallspitze (1) mit der Kunststoff-Basis (2) durch ein erstes Verbindungselement (3) und ein zweites Verbindungselement (4) verbunden ist.

7. Walzenspitze (W) nach Anspruch 6, **dadurch gekennzeichnet, dass** eines der beiden Verbindungselemente (3, 4) eine Schraube und das jeweils andere Verbindungselement (3, 4) eine Mutter ist.

8. Walzenspitze (W) nach einem der vorigen Ansprüche 5 bis 7, **dadurch gekennzeichnet, dass** eines der Verbindungselemente (3, 4) in die Kunststoff-Basis (2) eingegossen ist und das jeweils andere Verbindungselement (3, 4) Teil der Metallspitze (1) ist.

9. Walzenspitze (W) nach einem der vorigen Ansprüche, **dadurch gekennzeichnet, dass** die Kunststoff-Basis (2) mit einer Befestigungsplatte (6) verbindbar ist.

10. Walzenspitze (W) nach einem der vorigen Ansprüche, **dadurch gekennzeichnet, dass** die Kunststoff-Basis (2) mit einer Oberfläche der Landwirtschaftsmaschinen-Stachelwalze verbindbar ist.

11. Walzenspitze (W) nach einem der vorigen Ansprüche, **dadurch gekennzeichnet, dass** eine Passscheibe (11) an einen Basis-Boden (14) anbringbar ist, wobei in Gebrauchslage zwischen der Passscheibe (11) und dem Basis-Boden (14) ein Aushalsungsspalt (16) vorhanden ist.

12. Walzenspitze (W) nach Anspruch 11, **dadurch gekennzeichnet, dass** die Passscheibe (11) und der Basis-Boden (14) in Einbaulage einen gemeinsamen Einlass (13) ausbildet, wozu der Basis-Boden (14) einen Schraubkanal (12) aufweist und die Passscheibe (11) einen Scheibendurchlass (17) aufweist.

13. Walzenspitze (W) nach Anspruch 11 oder 12, **dadurch gekennzeichnet, dass** die Passscheibe (11) eine Schrauböffnung (15) aufweist.

## Claims

1. Roller tip (W) adapted to be placed on a spiked roller made of a metallic material, the roller tip (W) consisting of a base and a tip resting on the base,
**characterized in that**
the base is a plastic base (2) and the tip is a metal tip (1), wherein the metal tip (1) is connected to the plastic base (2).

2. Roller tip (W) according to claim 1, **characterized in that** the plastic base (2) has a Shore hardness D of 55 to 85, more preferably 65 to 75.

3. Roller tip (W) according to claim 1 or 2, **characterized in that** the plastic base (2) is a hollowed-out truncated cone, wherein a top surface (9) of the truncated cone has a first opening.

4. Roller tip (W) according to any one of the preceding claims, **characterized in that** the metal tip (1) is a cone, wherein a base surface (10) of the cone has a second opening.

5. Roller tip (W) according to claim 4, **characterized in that** the first opening of the truncated cone and the second opening of the cone form a through-hole (8) in the position of use.

6. Roller tip (W) according to any one of the preceding claims, **characterized in that** the metal tip (1) is connected to the plastic base (2) by a first connecting element (3) and a second connecting element (4).

7. Roller tip (W) according to claim 6, **characterized in that** one of the two connecting elements (3, 4) is a screw and the respective other connecting element (3, 4) is a nut.

8. Roller tip (W) according to one of the preceding claims 5 to 7, **characterized in that** one of the connecting elements (3, 4) is cast into the plastic base (2) and that in each case the other connecting element (3, 4) is part of the metal tip (1).

9. Roller tip (W) according to one of the preceding claims, **characterized in that** the plastic base (2) can be connected to a mounting plate (6).

10. Roller tip (W) according to one of the preceding claims, **characterized in that** the plastic base (2) is connectable to a surface of the agricultural machine spiked roller.

11. Roller tip (W) according to one of the preceding claims, **characterized in that** a shim (11) can be attached to a base bottom (14), wherein a neck gap (16) is present between the shim (11) and the base bottom (14) in the operating position.

12. Roller tip (W) according to claim 11, **characterized in that** the shim (11) and the base bottom (14) form a common inlet (13) in the installed position, for which purpose the base bottom (14) has a screw channel (12) and the shim (11) has a disc passage (17).

13. Roller tip (W) according to claim 11 or 12, **characterized in that** the shim (11) has a screw opening (15).

## Revendications

1. Pointe de cylindre (W) conçue pour être placée sur un cylindre à dents en un matériau métallique, la pointe de cylindre (W) étant constituée d'une base et d'une pointe placée sur la base,
**caractérisée en ce que**
la base est une base en matière plastique (2) et la pointe est une pointe métallique (1), la pointe métallique (1) étant reliée à la base en matière plastique (2).

2. Pointe de cylindre (W) selon la revendication 1, **caractérisée en ce que** la base en matière plastique (2) présente une dureté Shore D de 55 à 85, de préférence de 65 à 75.

3. Pointe de cylindre (W) selon la revendication 1 ou 2, **caractérisée en ce que** la base en matière plastique (2) est un tronc de cône évidé, une surface de recouvrement (9) du tronc de cône présentant une première ouverture.

4. Pointe de cylindre (W) selon l'une des revendications précédentes, **caractérisée en ce que** la pointe métallique (1) est un cône, une surface de base (10) du cône présentant une seconde ouverture.

5. Pointe de cylindre (W) selon la revendication 4, **caractérisée en ce que** la première ouverture du tronc de cône et la seconde ouverture du cône forment un passage (8) dans la position d'utilisation.

6. Pointe de cylindre (W) selon l'une des revendications précédentes, **caractérisée en ce que** la pointe métallique (1) est reliée à la base en matière plastique (2) par un premier élément de liaison (3) et un second élément de liaison (4).

7. Pointe de cylindre (W) selon la revendication 6, **caractérisée en ce que** l'un des deux éléments de liaison (3, 4) est une vis et l'autre élément de liaison (3, 4) respectif est un écrou.

8. Pointe de cylindre (W) selon l'une des revendications précédentes 5 à 7, **caractérisée en ce que** l'un des éléments de liaison (3, 4) est moulé dans la base en matière plastique (2) et l'autre élément de liaison (3, 4) respectif fait partie de la pointe métallique (1).

9. Pointe de cylindre (W) selon l'une des revendications précédentes, **caractérisée en ce que** la base en matière plastique (2) peut être reliée à une plaque de fixation (6).

10. Pointe de cylindre (W) selon l'une des revendications précédentes, **caractérisée en ce que** la base en matière plastique (2) peut être reliée à une surface du cylindre à dents de machine agricole.

11. Pointe de cylindre (W) selon l'une des revendications précédentes, **caractérisée en ce qu'**une rondelle d'ajustage (11) peut être fixée à un fond de base (14), dans la position d'utilisation, une fente de col (16) étant prévue entre la rondelle d'ajustage (11) et le fond de base (14).

12. Pointe de cylindre (W) selon la revendication 11, **caractérisée en ce que** la rondelle d'ajustage (11) et le fond de base (14) forment une entrée commune (13) dans la position de montage, moyennant quoi le fond de base (14) présente un canal de vissage (12) et la rondelle d'ajustage (11) présente un accès pour rondelle (17).

13. Pointe de cylindre (W) selon la revendication 11 ou 12,
**caractérisée en ce que** la rondelle d'ajustage (11) présente une ouverture pour vis (15).
